(19) Europäisches Patentamt
European Patent Office
Office européen des brevets

(11) **EP 2 766 976 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **12778679.6**

(22) Anmeldetag: **09.10.2012**

(51) Int Cl.:
**H02K 1/27** (2006.01)

(86) Internationale Anmeldenummer:
**PCT/EP2012/069961**

(87) Internationale Veröffentlichungsnummer:
**WO 2013/053704 (18.04.2013 Gazette 2013/16)**

(54) **OPTIMIERTE SPEICHENROTOR- INNENGEOMETRIE**

OPTIMIZED SPIDER ROTOR INTERNAL GEOMETRY

ROTOR EN ÉTOILE À GÉOMÉTRIE INTÉRIEURE OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2011 DE 102011084294**

(43) Veröffentlichungstag der Anmeldung:
**20.08.2014 Patentblatt 2014/34**

(73) Patentinhaber: **Robert Bosch GmbH**
**70442 Stuttgart (DE)**

(72) Erfinder:
• **KUPKE, Norbert**
**29690 Gilten-Nienhagen (DE)**
• **GUTMANN, Kevin**
**74360 Ilsfeld (DE)**
• **NEUBAUER, Achim**
**76547 Sinzheim-Vormberg (DE)**
• **NOMMENSEN, Bjoern**
**31848 Bad Muender (DE)**

(56) Entgegenhaltungen:
**WO-A2-2009/046549**

**Beschreibung**

Stand der Technik

Die vorliegende Erfindung betrifft einen Speichenrotor für eine elektrische Maschine, mit einer um eine Rotorachse drehbaren Rotorwelle, einem Grundkörper, der konzentrisch um die Rotorwelle angeordnet ist, und zumindest einem Dauermagneten, der in einer Aussparung des Grundkörpers speichenartig angeordnet ist. Die vorliegende Erfindung betrifft weiterhin eine elektrische Maschine mit einem erfindungsgemäßen Speichenrotor sowie ein Verfahren zur Herstellung des erfindungsgemäßen Speichenrotors.

Elektrische Maschinen sind beispielsweise Elektromotoren, Starter, Generatoren oder Hilfsantriebe, beispielsweise Verstellantriebe für Kraftfahrzeuge.

Bei solchen elektrischen Maschinen ist es bekannt, den Rotor oder den Stator zur Erzeugung eines elektromagnetischen Feldes mit zumindest einem Dauermagneten auszustatten. Dabei werden die Dauermagnete häufig, beispielsweise in dauermagneterregten Servomotoren, in Aussparungen eines zumeist eisenhaltigen Grundkörpers eingesetzt.

Bekannt sind sogenannte Speichenrotoren, bei denen sich die Dauermagnete speichenartig, d. h. in radialer Richtung, im Rotor erstrecken. Ein solcher Speichenrotor ist beispielsweise aus der Druckschrift WO 2009/046549 A2 bekannt. Die Fig. 1 zeigt einen Ausschnitt aus einem Schnittbild dieses Speichenrotors 1. Der Speichenrotor 1 ist an einer Rotorwelle 2 angeordnet und weist einen Grundkörper 3 mit einer Vielzahl von Aussparungen auf, in denen die Dauermagnete 4 speichenartig angeordnet sind, so dass sich diese zum Einen in axialer Richtung und zum Anderen in radialer Richtung des Speichenrotors 1 erstrecken. Die Dauermagnete 4 sind in tangentialer Richtung abwechselnd entgegengesetzt polarisiert, so dass sich in Umfangrichtung des Rotors 1 immer ein magnetischer Nordpol N mit einem magnetischen Südpol S abwechselt. Im Betrieb wird ein Regelstrom im Stator (nicht gezeigt) so gesteuert, dass sich ein rotierendes Magnetfeld ergibt, welches den Speichenrotor 1 mitnimmt.

An seiner der Rotorwelle 2 zugewandten Seite weist der Grundkörper 3 einen Befestigungsring 33 auf. Mittels des Befestigungsringes 33 wird der Grundkörper 3 zumeist an der Rotorwelle 2 fixiert. Am Befestigungsring 33 ist zur Befestigung jedes Dauermagneten 4 jeweils eine Haltenase 331 vorgesehen, die den Dauermagneten 4 in der Aussparung hält. Um den Streufluss an dieser Seite möglichst gering zu halten, sind Luftspalte 5 vorgesehen und die entgegen gesetzt polarisierten Bereiche des Grundkörpers 3 lediglich über einen schmalen Längssteg 32 mit dem Befestigungsring 33 und der Haltenase 331 verbunden. Außerdem ist auf der der Rotorwelle 2 abgewandten Seite bei solchen Speichenrotoren 1 häufig ebenfalls ein schmaler Verbindungssteg 34 vorgesehen, der den Dauermagneten 4 radial nach außen festhält und hier nur schematisch gezeigt ist. Durch die Querschnittsverengung wird versucht, den magnetischen Fluss in Sättigung zu bringen und in Richtung des Stators zu lenken.

Grundsätzlich weisen solche Speichenrotoren 1 zwar eine hohe Leistungsdichte auf. Jedoch verringern die an der der Rotorwelle 2 zugewandten sowie an der der Rotorwelle 2 abgewandten Seite auftretenden Streuflüsse die abgebbare Leistung der Maschine, da die Streuflüsse keinen Beitrag zum im Betrieb abgegebenen Motordrehmoment beziehungsweise zur abgegebenen Leistung der elektrischen Maschine leisten und den Wirkungsgrad der elektrischen Maschine daher verringern.

Offenbarung der Erfindung

Aufgabe der Erfindung ist es, einen Rotor für eine elektrische Maschine zu schaffen, in dem Dauermagnete, insbesondere gesinterte Magnete, beispielsweise Seltenerdmagnete wie NdFeB- Magnete, angeordnet sind, wobei der den Eisenanteil enthaltende Grundkörper des Rotors in Bezug auf seinen magnetischen Fluss optimiert ist, so dass die Streuverluste im Rotor minimiert sind, und der Rotor entweder eine vergleichsweise höhere Leistungsdichte sowie einen verbesserten Wirkungsgrad aufweist oder das Magnetvolumen minimiert ist, und wobei der Speichenrotor zudem kostengünstig herstellbar ist.

Die Aufgabe wird gelöst mit einem Rotor für eine elektrische Maschine, der eine Rotorwelle umfasst, die sich in eine axiale Richtung entlang einer Rotorachse erstreckt, und der einen Grundkörper umfasst, der konzentrisch um die Rotorwelle angeordnet und drehfest an dieser befestigt ist. Im Grundkörper des Rotors sind Dauermagnete eingebettet. Weiterhin weist der Grundkörper Sammelstege auf, die an die Dauermagnete angrenzen, und die zum Sammeln des magnetischen Nutzflusses vorgesehen sind. Der Rotor ist dadurch gekennzeichnet, dass die Dauermagnete an ihrer der Rotorwelle zugewandten Seite über die Sammelstege überstehen.

Es hat sich gezeigt, dass magnetische Streuflüsse, die zur Rotorwelle hin abfließen, bei über die Sammelstege hinausragenden Dauermagneten geringer sind, als bei Dauermagneten, die nicht über die Sammelstege hinausragen. Aufgrund der geringeren Streuflussverluste ist die Leistungsdichte einer elektrischen Maschine mit einem solchen Rotor größer, als die Leistungsdichte einer herkömmlichen elektrischen Maschine. Der erfindungsgemäße Rotor ist daher bezüglich seiner Leistungsdichte optimierbar, und/oder die Größe und das Gewicht der Dauermagnete und/oder die Größe des Rotors sind bei gleicher Leistungsdichte verringerbar.

Der Grundkörper ist bevorzugt aus einem paramagnetischen Werkstoff mit einer Permeabilitätszahl $\mu_r$, die erheblich größer ist als 1 und daher den magnetischen Fluss gut leitet, gefertigt, beispielsweise aus einem eisenhaltigen und insbesondere aus einem weichmagnetischen Werkstoff. Bevorzugt wird hierfür Elektroblech, dass auch als Trafo-Blech bezeichnet wird, verwendet.

Es ist weiterhin bevorzugt, den Grundkörper aus einer Vielzahl von Lamellen als Lamellenpaket zu fertigen. Die Lamellen werden beispielsweise durch Stanzpaketierung zu dem Lamellenpaket gefügt, wobei sie beispielsweise mittels Stanznoppen oder anderer Formen miteinander verbunden werden. Ein solches Blechpaket hat den Vorteil, dass es nicht zwingend mit einem spanabtragenden Verfahren nachbearbeitet werden muss, und dass bei Verwendung von isoliertem Elektroblech außerdem die Wirbelstrombildung reduziert ist.

In einer weiteren bevorzugten Ausführungsform ist die Herstellung des Grundkörpers aus einer Vielzahl von Lamellen auch ohne Stanzpaketierung möglich, sofern der Grundkörper mit einer Hülse an der Rotorwelle festgelegt ist. Dafür kann die Hülse vorgefertigt sein, oder Grundkörper, Dauermagnete und Rotorwelle werden mittels eines aushärtbaren Mediums aneinander gefügt, beispielsweise mittels eines Thermoplasten oder eines Duroplasten.

Weiterhin ist eine Ausführungsform bevorzugt, bei der der Grundkörper aus einem Vollmaterial oder zumindest teilweise aus einem Vollmaterial hergestellt ist.

Bevorzugt sind die Dauermagnete speichenartig im Grundkörper angeordnet. Speichenartig im Sinne der Erfindung ist ein Dauermagnet angeordnet, der sich parallel einer fiktiven Ebene erstreckt, welche durch eine radial von der Rotorachse ausgehende Linie sowie eine sich parallel zur Rotorachse erstreckende Linie aufgespannt ist.

In einer weiteren bevorzugten Ausführungsform, die die Aufgabe ebenfalls löst, umfasst der Rotor die Rotorwelle, die sich in eine axiale Richtung erstreckt, und den Grundkörper, der konzentrisch um die Rotorwelle angeordnet und drehfest an dieser befestigt ist, wobei der Grundkörper Sektoren aufweist, die von der Rotorwelle beabstandet sind, und zwischen denen jeweils ein Dauermagnet speichenartig angeordnet ist, und wobei der Abstand der Sektoren von der Rotorwelle größer ist, als der Abstand der Dauermagnete von der Rotorwelle.

Auch in dieser Ausführungsform des Rotors ragen die Dauermagneten über die Sektoren hinaus. Es hat sich auch hier gezeigt, dass weniger magnetische Streuflüsse zur Rotorwelle hin abfließen, so dass auch die Leistungsdichte einer elektrischen Maschine mit einem Rotor dieser Ausführungsform im Vergleich zu einer herkömmlichen elektrischen Maschine vergrößert ist.

Es ist bevorzugt, dass auch dieser Rotor Sammelstege aufweist, die weiterhin bevorzugt an der der Rotorwelle zugewandten Seite der Sektoren vorgesehen sind. Vorzugsweise sind sie jeweils beidseitig der Dauermagnete angeordnet. Der Abstand der Sammelstege von der Rotorwelle ist bevorzugt so bemessen, dass die Dauermagnete vom Grundkörper beziehungsweise von den Sektoren so umschlossen sind, dass im Betrieb des Rotors keine Entmagnetisierung der Dauermagneten auftritt, wobei der Abstand der Dauermagneten zur Rotorwelle hin in jeder Toleranzlage kleiner ist, als der Abstand der Sammelstege von der Rotorwelle.

In einer bevorzugten Ausführungsform sind die Sammelstege etwa V- förmig ausgebildet. Dabei ist sowohl eine spitze V- Form, als auch eine abgeflachte V- Form als auch eine abgerundete V- Form oder geschwungene Form denkbar.

Zur Befestigung des Grundkörpers beziehungsweise seiner Sektoren an der Rotorwelle ist eine Ausführungsform bevorzugt, in der der Grundkörper einen Befestigungsring aufweist, der an der der Rotorwelle zugewandten Seite des Grundkörpers angeordnet ist. Die Befestigung ist aber auch alternativ oder zusätzlich mittels einer Hülse möglich.

Die Sektoren eines solchen Grundkörpers mit Befestigungsring sind bevorzugt zumindest teilweise mittels Längsstegen mit dem Befestigungsring verbunden. Die Längsstege sind daher an der der Rotorwelle zugewandten Seite der Sektoren angeordnet. Bevorzugt sind sie zwischen den Sammelstegen vorgesehen.

Alternativ oder zusätzlich zu den Längsstegen können zumindest einige der Sektoren oder alle Sektoren auch mittels Verbindungsstegen miteinander verbunden sein. Die Verbindungsstege sind bevorzugt an der der Rotorwelle abgewandten Seite der Sektoren angeordnet. Da die Dauermagnete zwischen den Sektoren angeordnet sind, fixieren die Verbindungsstege die Dauermagnete zudem in eine radiale Richtung des Rotors. Sofern zwischen den Sektoren kein Verbindungssteg vorgesehen ist, ist es bevorzugt, an den Sektoren Haltestege zum Fixieren der Dauermagnete in die radiale Richtung anzuordnen.

Bei einer Ausführungsform des Grundkörpers mit Befestigungsring und Längsstegen fließt zumindest ein Teil der Streuflüsse über die Längsstege zur Rotorwelle hin ab. Es ist bevorzugt, die Breite der Längsstege zu minimieren, um die über die Längsstege abfließenden Streuflüsse zu minimieren.

Die Dauermagnete sind in Aussparungen des Grundkörpers beziehungsweise zwischen den Sektoren angeordnet. Die Aussparungen sind bevorzugt möglichst groß vorgesehen. Dadurch ist einerseits jeder Dauermagnet leichter in seine Aussparung fügbar. Zudem ist es bevorzugt, dass nach dem Fügen der Dauermagnete in die Aussparungen zwischen den Sektoren und den Dauermagneten an ihrer der Rotorwelle zugewandten Seite, und der Rotorwelle beziehungsweise dem Befestigungsring ein Freiraum verbleibt. Der verbleibende Freiraum der Aussparung ist bevorzugt mit einem nichtleitenden Material, insbesondere mit Luft oder einem Kunststoff, gefüllt. Da der verbleibende Freiraum mit einem nichtleitenden Material gefüllt ist, sind die über den Freiraum abfließenden Streuflüsse sehr gering.

Zur Befestigung der Dauermagnete sind bevorzugt Klemmmittel vorgesehen, die besonders bevorzugt jeweils in dem verbleibenden Freiraum angeordnet sind. Die Klemmmittel sind bevorzugt elastisch und/oder plastisch ausgebildet, ganz besonders bevorzugt als Federn. In einer bevorzugten Ausführungsform sind die Klemmmittel aus einem nicht leitenden Material hergestellt, beispielsweise aus einem Kunststoff. Ebenfalls bevorzugt sind sie aus Federstahl gefertigt.

Die Abstandsdifferenz zwischen dem Abstand der Dauermagnete zur Rotorwelle und dem Abstand der Sektoren beziehungsweise der Sammelstege zur Rotorwelle ist der Überstand, um den die Dauermagnete an ihrer der Rotorwelle zugewandten Seite die Sektoren beziehungsweise die Sammelstege überragen.

Es ist bevorzugt, dass für das Verhältnis des Überstandes zur Länge der Längsstege gilt:

$$\Delta H / H_{LSt} \leq 1{,}1 * \Delta H / H_M$$

mit

$\Delta H$ : Überstand der Dauermagnete (314)
$H_{LST}$ : Länge der Längsstege
$H_M$ : Höhe der Dauermagnete in radialer Richtung

Ganz besonders bevorzugt ist

$$\Delta H / H_{LSt} \leq \Delta H / H_{M.}$$

Es hat sich gezeigt, dass eine Flussdichte in dem unterhalb des Dauermagneten verbleibenden Freiraum, und somit ein erreichbares Drehmoment, berechenbar ist mit:

$$\Phi_{Luftspalt} = \Phi_{Magnet} - \Phi_{Streusteg}$$

$$\Phi_{Luftspalt} = (H_M * L_{axial} * B_{Magnet}) - (B_{LST} * L_{axial} * B_{Satsteg})$$

mit

$L_{axial}$ = Länge des Dauermagneten in axialer Richtung [mm]
$B_{LST}$ = Breite des Dauermagneten [mm]
$\Phi_{Luftspalt}$ = magnetischer Fluss im Luftspalt zwischen Rotor und Stator [T]
$\Phi_{Magnet}$ = magnetischer Fluss im Dauermagneten
$\Phi_{Streusteg}$ = magnetischer Fluss im Längssteg
$B_{Magnet}$ = Flussdichte im Dauermagneten [T]
$B_{Satsteg}$ = Flussdichte im Längssteg, bei der der Längssteg gesättigt ist [T]

Die Aufgabe wird weiterhin gelöst mit einer elektrischen Maschine mit dem erfindungsgemäßen Rotor. Die Leistungsdichte der elektrischen Maschine ist sehr groß, so dass sie einen sehr guten Wirkungsgrad aufweist und vergleichsweise klein und kostengünstig baubar ist. In einer bevorzugten Ausführungsform ist die elektrische Maschine ein Elektromotor, bevorzugt eine Synchronmaschine, besonders bevorzugt eine elektrisch kommutierte Synchronmaschine. Aufgrund der großen Leistungsdichte ist das vom Elektromotor abgebbare Drehmoment sehr groß. Oder alternativ ist ein erfindungsgemäßer Elektromotor mit gleichem abgebbarem Drehmoment mit kleineren Dauermagneten und/oder kompakter baubar im Vergleich zu einem herkömmlichen Elektromotor. Der erfindungsgemäße Rotor ist aber auch für andere elektrische Maschinen nutzbar, beispielsweise für einen Generator, einen Verstellantrieb oder Servoantrieb für ein Kraftfahrzeug oder für einen Starter.

Die Aufgabe wird weiterhin gelöst mit einer Handwerkzeugmaschine mit einer solchen elektrischen Maschine, insbesondere mit einem Elektromotor. Die Handwerkzeugmaschine ist bevorzugt eine Bohrmaschine, eine Stichsäge oder ähnlich. Prinzipiell eignet sich der erfindungsgemäße Rotor aber auch für Haushaltsmaschinen, tragbare elektrische Gartengeräte oder ähnlich.

Die Aufgabe wird weiterhin gelöst mit einem Verstellantrieb für ein Kraftfahrzeug, insbesondere einem Lenkantrieb, mit einem solchen Elektromotor.

Im Folgenden wird die Erfindung anhand von **Figuren** beschrieben. Die **Figuren** sind lediglich beispielhaft und schränken den allgemeinen Erfindungsgedanken nicht ein.

**Fig. 1**      zeigt einen Ausschnitt aus einem Speichenrotor gemäß dem Stand der Technik,

**Fig. 2**      zeigt in den **Fig. 2(a) - (b)** jeweils Ausschnitte aus verschiedenen Ausführungsformen erfindungsgemäßer Rotoren, in denen Dauermagnete speichenartig angeordnet sind,

**Fig. 3**      zeigt in **Fig. 3(a) - (b)** beispielhaft ein erreichbares Drehmoment eines Elektromotors mit erfindungsgemäßem Rotor bei Veränderung eines Überstandes des Dauermagneten, und

**Fig. 4**      zeigt in den **Fig. 4(a) - (b)** jeweils einen Ausschnitt aus einem herkömmlichen sowie einen Ausschnitt aus einem erfindungsgemäßen Rotor, wobei der Verlauf des magnetischen Flusses beispielhaft gezeigt ist.

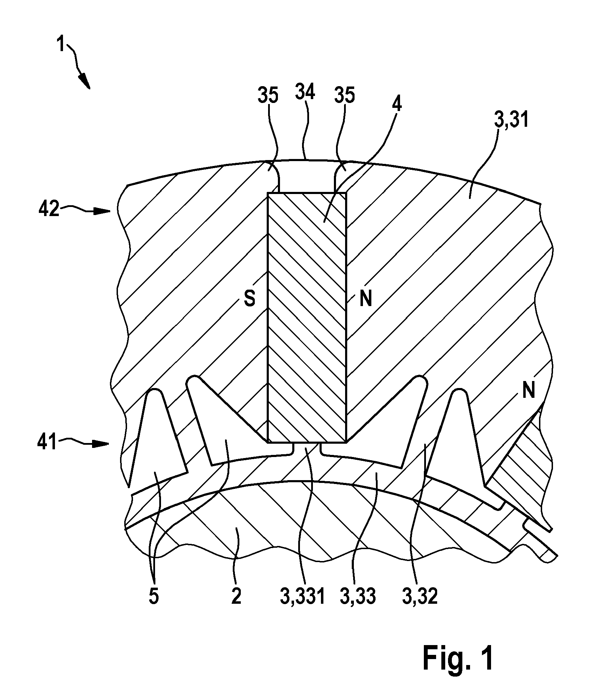

**Fig. 1** zeigt einen Ausschnitt aus einem Speichenrotor gemäß dem Stand der Technik, wie oben bereits beschrieben.

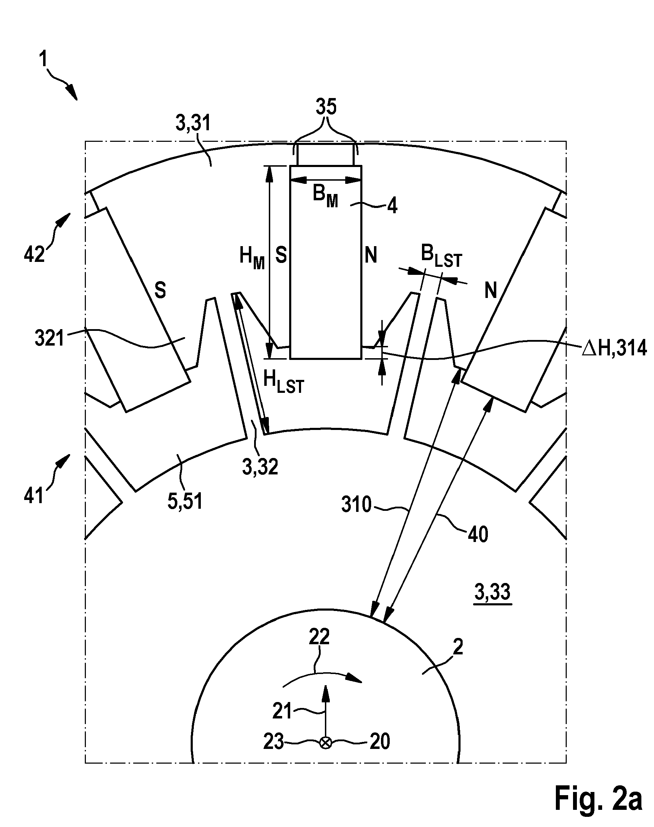

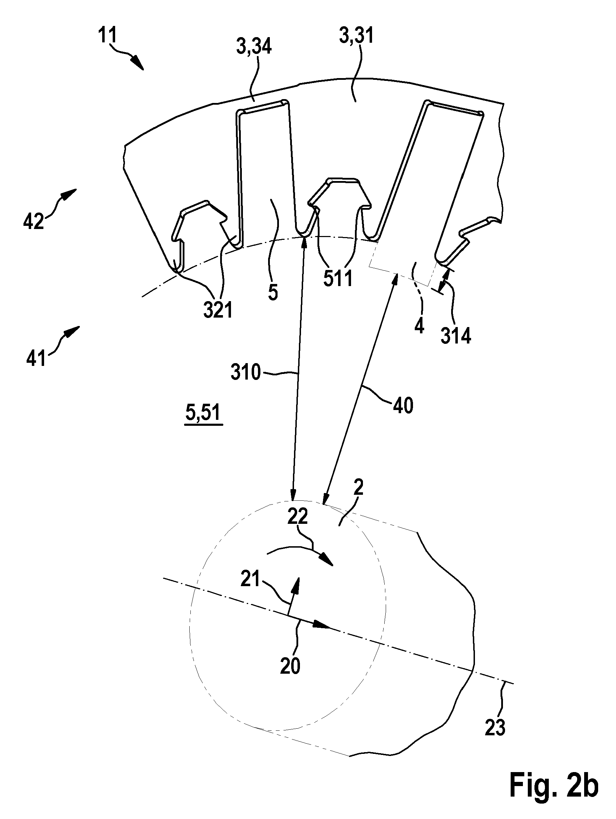

**Fig. 2** zeigt in **(a)** einen Ausschnitt aus einer ersten Ausführungsform eines erfindungsgemäßen Rotors.

Der Rotor 1 weist einen Grundkörper 3 auf, der Sektoren 31 umfasst, zwischen denen Dauermagnete 4 angeordnet sind. Der Grundkörper 3 umfasst zudem einen Befestigungsring 33, der zur drehfesten Befestigung des Rotors 1 an einer Rotorwelle 2 vorgesehen ist, die sich in axialer Richtung 20 einer Rotorachse 23 erstreckt. Jeder der Sektoren 31 des Grundkörpers 3 ist mittels eines Längssteges 32 mit dem Befestigungsring 33 verbunden. Sektoren 31, Befestigungsring 33 und Längsstege 32 sind hier einstückig insbesondere aus Elektroblech gebildet.

Angrenzend an die Dauermagnete 4 weisen die Sektoren 31 Sammelstege 321 auf, die etwa V-förmig ausgebildet sind, und hier eine abgeflachte Kontur aufweisen. Die Längsstege 32 sind jeweils zwischen den Sammelstegen 321 angeordnet. Die Sektoren 31 weisen an der der Rotorwelle 2 abgewandten Seite 42 außerdem Haltestege 35 auf, durch die die Dauermagnete 4 in einer radialen Richtung 21 des Rotors 1 fixiert sind.

Die Dauermagnete 4 sind in Aussparungen 5 des Grundkörpers 3 speichenartig angeordnet, so dass sie sich parallel einer fiktiven Ebene (nicht gezeigt) erstrecken, die durch eine sich in radialer Richtung 21 zur Rotorwelle 2 und eine sich in axialer Richtung 20 zur Rotorwelle 2 erstreckende Linie (nicht gezeigt) aufgespannt ist.

Zwischen den Sektoren 31 ist die Aussparung 5 so vorgesehen, dass sie die Dauermagnete 4 umgibt. An der der Rotorwelle 2 zugewandten Seite 41 ist sie hingegen so groß vorgesehen, dass die Dauermagnete 4 in die Aussparung 5 einschiebbar sind. Zudem verbleibt bei eingeschobenen Dauermagneten 4 an der der Rotorwelle 2 zugewandten Seite 41 ein Freiraum 51. Zum Fixieren der Dauermagnete 4 gegen die radiale Richtung 21 können in dem Freiraum 51 Klemmmittel (nicht gezeigt) vorgesehen sein, die beispielsweise elastisch oder federnd ausgebildet sind.

Sichtbar ist hier, dass die Dauermagnete 4 an der der Rotorwelle 2 zugewandten Seite 41 über die Sektoren 31 beziehungsweise die Sammelstege 321 hinausragen. Der Abstand 40 der Dauermagnete 4 von der Rotorwelle 2 ist somit kleiner, als der Abstand 310 der Sektoren beziehungsweise Sammelstege 321 von der Rotorwelle 2.

Die **Fig. 2(b)** zeigt einen Ausschnitt aus einer einzelnen Lamelle 11 eines Grundkörpers 3 einer weiteren Ausführungsform eines erfindungsgemäßen Rotors 1, wobei ein Dauermagnet 4 sowie Rotorwelle 2 und Rotorachse 23 schematisch durch gestrichelte Linien angedeutet sind.

Bei diesem Rotor 1 weist der Grundkörper 3 die Sektoren 31 mit Sammelstegen 321 auf, jedoch keinen Befestigungsring 33 und keine Längsstege 32. Die Sektoren 31 sind an der der Rotorwelle 2 abgewandten Seite 42 teilweise mittels Verbindungsstegen 34 miteinander verbunden. Zudem sind die Sammelstege 321 hier abgerundet ausgebildet.

Bei einem solchen Rotor 1 wird der Grundkörper 3 bevorzugt mittels einer Hülse (nicht gezeigt) drehfest an der Rotorwelle 2 befestigt. Eine solche Hülse ist bevorzugt aus einem elastischen und/oder plastischen Material, insbesondere einem Kunststoff, vorzugsweise einem Thermoplast, gebildet. Zum Fügen sind hier im Grundkörper 3 Formschlussmittel 511 vorgesehen in Form von Hinterschneidungen.

Der an der der Rotorwelle 2 zugewandten Seite 41 nach dem Fügen der Dauermagnete 4 verbleibende Freiraum 51 umgibt daher hier die gesamte Rotorwelle 2 und ist in einer bevorzugten Ausführungsform vollständig mit der aus nichtleitendem Material gebildeten Hülse ausgefüllt. In dieser Ausführungsform werden die Dauermagnete 4 an ihrer der Rotorwelle 2 abgewandten Seite 41 jeweils mittels der Hülse gegen die radiale Richtung 21 in ihrer Aussparung 5 fixiert.

Auch in dieser Ausführungsform ist der Abstand 310 zwischen den Sektoren 31 beziehungsweise den Sammelstegen 321 und der Rotorwelle 2 größer, als der Abstand 40 der Dauermagnete 4 zur Rotorwelle 2. Dadurch weisen die Dauermagnete 4 auch hier den Überstand 314 auf.

Die erfindungsgemäßen Rotoren 1 werden bevorzugt in Lenkantrieben verwendet. Die Erfindung ist aber nicht auf Lenkantriebe beschränkt, sondern eignet sich allgemein für Speichenrotoren, beispielsweise ebenfalls für Antriebsmotoren von Handwerkzeugmaschinen. Bevorzugt werden Dauermagnete 4 eingesetzt, die anteilig ein Seltenerdmetall, beispielsweise Neodym, enthalten. Prinzipiell sind aber auch andere Dauermagnete verwendbar. Typische Flussdichten der Dauermagnete 4 liegen bei 1,4 - 1,2T. Bei einer solchen Flussdichte liegt die axiale Rotorlänge beziehungsweise Dauermagnetlänge bevorzugt im Bereich 10 - 100mm, ganz besonders bevorzugt im Bereich 15 - 65mm, der bevorzugte Rotordurchmesser bei 30 - 70mm, besonders bevorzugt bei 47 - 52mm. Die Dauermagnethöhe $H_M$ in radialer Richtung 21 liegt bevorzugt im Bereich 2 - 20, besonders bevorzugt im Bereich 4 - 10mm, und seine Breite $B_M$ in tangentialer Richtung 22 ist bevorzugt kleiner als 15mm, besonders bevorzugt kleiner als 7mm. Die Steglänge $H_{LST}$ des Längssteges 32 kann deutlich variieren. Sie beträgt bevorzugt etwa 2 - 30mm, besonders bevorzugt 2 - 20mm. Der Magnetüberstand $\Delta H$ variiert dabei zwischen weinigen Bruchteilen mm bis zu 2mm, besonders bevorzugt bis zu 1,5mm.

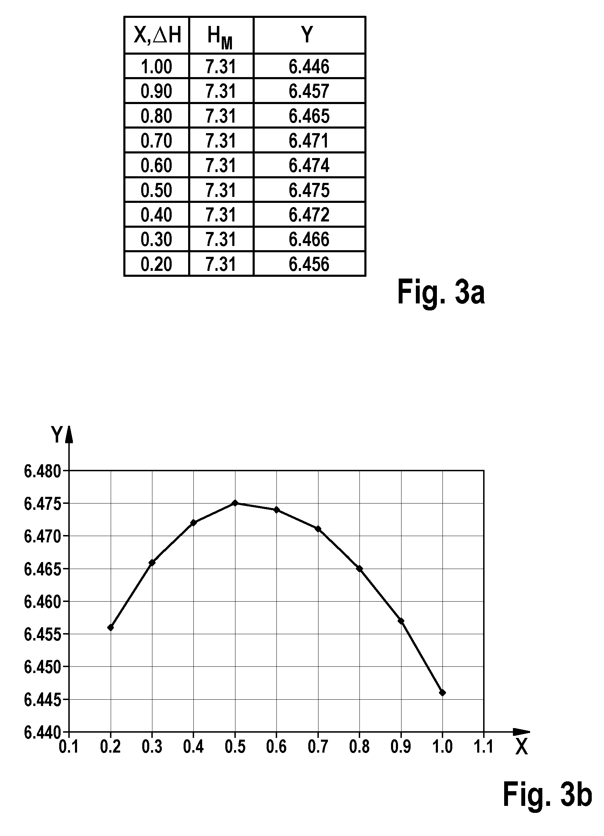

**Fig. 3** zeigt in **Fig. 3(a) - (b)** beispielhaft ein erreichbares Drehmoment eines Elektromotors (nicht gezeigt) mit einem erfindungsgemäßen Rotor 1 der Ausführungsform der **Fig. 2(a)** bei Veränderung des Überstandes $\Delta H$ der Dauermagneten 4. Die **Fig. 3(a)** zeigt die Messergebnisse tabellarisch, die **Fig. 3(b)** grafisch, wobei der Überstand der Dauermagneten auf der Y-Achse aufgetragen ist, und das erreichbare Drehmoment auf der X-Achse. Bei der Messung ist der Überstand $\Delta H$ der Dauermagneten 4 sowie ihre Höhe $H_M$ in der Einheit [mm] bemessen, das Drehmoment in der Einheit [Nm].

Die Querschnittsgeometrie des Rotors entspricht der der **Fig. 2(a)** und ist für diese Messung beispielhaft gewählt. Zudem sind die Höhe $H_M$ der Dauermagneten 4 und die Länge $H_{LSt}$ der Längsstege 32 konstant gewählt. Die Länge $H_{LS}$ der Längsstege 32 beträgt $H_{LSt}$ = 6,93mm.

Durch die Messung ist sichtbar, dass sich ein maximales Drehmoment bei einem Überstand 314 von $\Delta H$ = 0,5mm ergibt.

Der Streufluss ist zudem von einer Breite $B_{LSt}$ der Längsstege 32 abhängig. Bei einem Rotor 1 mit Längsstegen 32, wie er hier beispielhaft gewählt ist, sind diese daher gerade so zu dimensionieren, dass sie eine ausreichende mechanische Festigkeit aufweisen, und andererseits so schmal wie möglich ausgebildet sind, um die Streuverluste zu minimieren.

Bei kleinst möglicher Breite $B_{LSt}$ der Längsstege 32 von hier etwa $B_{LSt} \approx 0,7$mm zeigt sich, dass sich ein optimales Verhältnis des Überstandes $\Delta H$ der Dauermagnete 4 zur Höhe $H_M$ der Dauermagnete von $\Delta H/H_M \approx 0,068$ einstellt.

Um minimale Streuverluste zu erzielen, sollte für das Verhältnis des Überstandes $\Delta H$ zur Länge $H_{LSt}$ der Längsstege 32 zumindest $\Delta H/H_{LSt} \leq 1,1^* \Delta H/H_M$ gelten, oder sogar $\Delta H/H_{LSt} \leq \Delta H/H_M$. Im vorliegenden Ausführungsbeispiel ist das Verhältnis bei etwa $\Delta H/H_{LSt} \approx 0,072$ optimal gewählt.

Anstelle des größeren erzielbaren Drehmomentes ist auch die Höhe $H_M$ der Dauermagnete 4 optimierbar. Um dasselbe Drehmoment wie bei einem herkömmlichen Rotor zu erreichen, könnte die Höhe $H_M$ der Dauermagnete 4 in einem erfindungsgemäßen Rotor 1 auf etwa $H_M$ = 7,1 mm gekürzt werden.

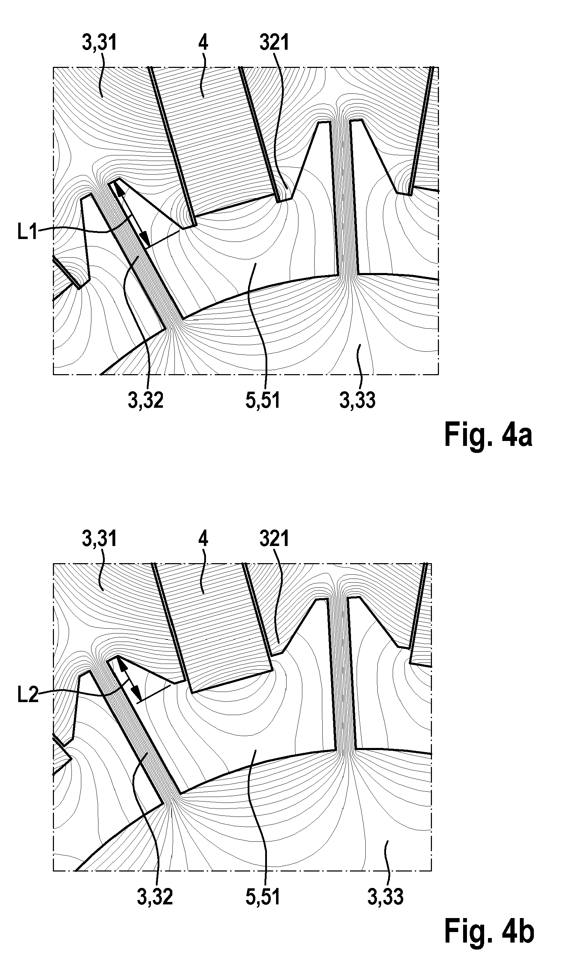

In den **Fig. 4(a) und (b)** ist jeweils beispielhaft eine Magnetfeldberechnung in einem Ausschnitt eines Rotors 1 gezeigt. Dabei zeigt die **Fig. 4(a)** einen Ausschnitt aus einem herkömmlichen Rotor 1, bei dem die Dauermagnete 4 vollständig zwischen den Sektoren 31 eingebettet sind, und die **Fig. 4(b)** einen Ausschnitt aus einem erfindungsgemäßen Rotor 1, bei dem die Dauermagnete 4 über die Sektoren 31 hinaus ragen. Und zwar unterscheiden sich die Sektoren 31 der beiden Ausführungsformen hier lediglich durch die Sammelstege 321, deren Länge L1 bei dem herkömmlichen Rotor 1 größer ist, als die Länge L2 bei dem erfindungsgemäßen Rotor 1.

Bei dem erfindungsgemäßen Rotor 1, bei dem die Dauermagnete 4 über die Sektoren 31 überstehen, sind die Magnetfeldlinien, die als Streuverluste über den Freiraum 51 und die Längsstege 32 in den Befestigungsring 33 übergehen, deutlich geringer, als bei vollständig zwischen den Sektoren 31 eingebetteten Dauermagneten 4.

Aufgrund der geringeren Streuflussverluste ist das in einem Luftspalt (nicht gezeigt) zwischen einem Stator (nicht gezeigt) einer elektrischen Maschine (nicht gezeigt) und ihrem Rotor 1 nutzbare Magnetfeld größer, so dass mit der elektrischen Maschine ein höheres Drehmoment übertragbar ist. Dies ermöglicht alternativ, die Höhe $H_M$ der Dauermagnete 4 beziehungsweise ihr Volumen zu verringern, um dasselbe Drehmoment zu erreichen.

Ein magnetischer Fluss im Luftspalt zwischen dem Rotor 1 und dem Stator, und daher ein bestimmtes erreichbares Drehmoment, ist näherungsweise berechenbar mit:

$$\Phi_{Luftspalt} = (H_M * L_{axial} * B_{Magnet}) - (B_{LST} * L_{axial} * B_{Satsteg})$$

Im obigen Beispiel beträgt bei kleinst möglicher Breite $B_{LSt}$ der Längsstege 32 von $B_{LSt} \approx 0,7$mm das optimale Verhältnis des Überstandes $\Delta H$ zur Höhe $H_M$ der Dauermagnete 4 $\Delta H/H_M \approx 0,068$.

Bei einem bekannten Verhältnis des Überstandes $\Delta H$ der Dauermagnete 4 zur Höhe $H_{LSt}$ der Längsstege 32 des Rotors 1, beziehungsweise einem bekannten Verhältnis des Überstandes $\Delta H$ zum Volumen $H_M * B_M$ der Dauermagnete 4 lässt sich mit $\Delta H/H_{LSt} \leq \Delta H/H_M$ und der o. g. Formel ein optimaler Überstand $\Delta H$ bestimmen.

Bei einem Rotor 1 mit einer Querschnittsgeometrie, bei der beispielsweise im Vergleich zum vorgenannten Ausführungsbeispiel das Volumen $H_M * B_M$ der Dauermagneten 4 vergrößert ist, sowie ein Dauermagnetmaterial mit einer größeren magnetischen Flussdichte $B_{Magnet}$ verwendet wird, gilt beispielsweise:

$$\Delta H / (H_M * B_M) \approx 0{,}0216$$

Ein optimaler Überstand $\Delta H$ der Dauermagneten 4 in den verbleibenden Freiraum 51 ist für einen solchen Rotor 1 berechenbar mit:

$$\Phi_{Luftspalt} = (\Delta H / (0{,}0216 * B_M)\ * L_{axial} * B_{Magnet}) - (B_{LST} * L_{axial} * B_{Satsteg})$$

$$\Delta H = (0{,}0216 * B_M * (\Phi_{Luftspalt} + (B_{LST} * L_{axial} * B_{Satsteg})) / L_{axial} * B_{Magnet}$$

**Patentansprüche**

1. Rotor (1) für eine elektrische Maschine, mit einer Rotorwelle (21), die sich in eine axiale Richtung (2) erstreckt, und einem Grundkörper (3), der konzentrisch um die Rotorwelle (2) angeordnet und drehfest an dieser befestigt ist, wobei im Grundkörper (3) Dauermagnete (4) eingebettet sind, und wobei der Grundkörper (3) Sammelstege (321) aufweist, die an die Dauermagnete (4) angrenzen,
**dadurch gekennzeichnet, dass**
die Dauermagnete (4) an ihrer der Rotorwelle (2) zugewandten Seite (41) über die Sammelstege (321) überstehen.

2. Rotor (1) nach Anspruch 1, **dadurch gekennzeichnet, dass** die Dauermagnete (4) speichenartig im Grundkörper (3) angeordnet sind.

3. Rotor (1) nach einem der vorherigen Ansprüche, **dadurch gekennzeichnet, dass** die Sammelstege (321) beidseitig der Dauermagnete (4) vorgesehen und/oder die Sammelstege (321) V- förmig ausgebildet sind.

4. Rotor (1) für eine elektrische Maschine, insbesondere nach einem der vorherigen Ansprüche, mit einer Rotorwelle (21), die sich in eine axiale Richtung (2) erstreckt, und einem Grundkörper (3), der konzentrisch um die Rotorwelle (2) angeordnet und drehfest an dieser befestigt ist, wobei der Grundkörper (3) Sektoren (31) aufweist, die von der Rotorwelle (2) beabstandet sind, und zwischen denen jeweils ein Dauermagnet (4) speichenartig angeordnet ist,
**dadurch gekennzeichnet, dass**
der Abstand (310) der Sektoren (31) von der Rotorwelle (2) größer ist, als der Abstand (40) der Dauermagnete (4) von der Rotorwelle (2).

5. Rotor (1) nach einem der vorherigen Ansprüche, **dadurch gekennzeichnet, dass** der Grundkörper (3) einen Befestigungsring (33) umfasst, der an der der Rotorwelle (2) zugewandten Seite (41) des Grundkörpers (3) angeordnet ist.

6. Rotor (1) nach einem der vorherigen Ansprüche, **dadurch gekennzeichnet, dass** zumindest einige der Sektoren (31) mittels Längsstegen (32) mit dem Befestigungsring (33) verbunden sind.

7. Rotor (1) nach einem der vorherigen Ansprüche, **dadurch gekennzeichnet, dass** die Längsstege (32) zwischen den Sammelstegen (321) angeordnet sind.

8. Rotor (1) nach einem der vorherigen Ansprüche, **dadurch gekennzeichnet, dass** an den Sektoren (31) Haltestege (35) zum Fixieren der Dauermagnete (4) in eine radiale Richtung (21) vorgesehen sind, und/oder zumindest einige der Sektoren (31) mittels Verbindungsstegen (34) miteinander verbunden sind.

9. Rotor (1) nach einem der vorherigen Ansprüche, **dadurch gekennzeichnet, dass** zwischen den Sektoren (31) und Dauermagneten (4) an ihrer der Rotorwelle (2) zugewandten Seite (41), und der Rotorwelle (2) oder dem Befestigungsring (33) ein Freiraum (5) vorgesehen ist, der mit einem nichtleitenden Material, insbesondere mit Luft oder einem Kunststoff, gefüllt ist.

10. Rotor (1) nach einem der vorherigen Ansprüche **dadurch gekennzeichnet, dass**

$$\Delta H/H_{LSt} \leq 1{,}1^* \; \Delta H/H_M$$

mit

$\Delta H$ : Überstand (314) der Dauermagnete (4)
$H_{LSt}$ : Länge der Längsstege (32)
$H_M$ : Höhe der Dauermagnete (4) in radialer Richtung (21)

11. Elektrische Maschine, insbesondere Elektromotor, mit dem Rotor (1) nach einem der vorherigen Ansprüche, wobei der Elektromotor vorzugsweise Bestandteil eines Lenkantriebs im Kraftfahrzeug ist.

## Claims

1. Rotor (1) for an electrical machine, having a rotor shaft (21) which extends in an axial direction (2), and having a main body (3) which is arranged concentrically around the rotor shaft (2) and is fastened to the said rotor shaft in a rotationally fixed manner, wherein permanent magnets (4) are embedded in the main body (3), and wherein the main body (3) has collecting webs (321) which adjoin the permanent magnets (4),
**characterized in that**
the permanent magnets (4), on their side (41) which faces the rotor shaft (2), project beyond the collecting webs (321).

2. Rotor (1) according to Claim 1, **characterized in that** the permanent magnets (4) are arranged in the main body (3) in the manner of spokes.

3. Rotor (1) as claimed in either of the preceding claims, **characterized in that** the collecting webs (321) are provided on both sides of the permanent magnets (4) and/or the collecting webs (321) are of V-shaped design.

4. Rotor (1) for an electrical machine, in particular according to one of the preceding claims, having a rotor shaft (21) which extends in an axial direction (2), and having a main body (3) which is arranged concentrically around the rotor shaft (2) and is fastened to the said rotor shaft in a rotationally fixed manner, wherein the main body (3) has sectors (31) which are at a distance from the rotor shaft (2) and between which in each case one permanent magnet (4) is arranged in the manner of a spoke,
**characterized in that**
the distance (310) between the sectors (31) and the rotor shaft (2) is greater than the distance (40) between the permanent magnets (4) and the rotor shaft (2).

5. Rotor (1) according to one of the preceding claims, **characterized in that** the main body (3) comprises a fastening ring (33) which is arranged on that side (41) of the main body (3) which faces the rotor shaft (2).

6. Rotor (1) according to one of the preceding claims, **characterized in that** at least some of the sectors (31) are connected to the fastening ring (33) by means of longitudinal webs (32).

7. Rotor (1) according to one of the preceding claims, **characterized in that** the longitudinal webs (32) are arranged between the collecting webs (321).

8. Rotor (1) according, to one of the preceding claims, **characterized in that** retaining webs (35) for fixing the permanent magnets (4) in a radial direction (21) are provided on the sectors (31), and/or at least some of the sectors (31) are connected to one another by means of connecting webs (34).

9. Rotor (1) according to one of the preceding claims, **characterized in that** a clearance (5) which is filled with a non-conductive material, in particular with air or a plastic, is provided between the sectors (31) and permanent magnets (4), on their side (41) which faces the rotor shaft (2), and the rotor shaft (2) or the fastening ring (33).

**10.** Rotor (1) according to one of the preceding claims, **characterized in that**

$$\Delta H/H_{LSt} \leq 1.1*\Delta H/H_M,$$

where

    $\Delta H$: excess length (314) of the permanent magnets (4),
    $H_{LSt}$: length of.the longitudinal webs (32), and
    $H_M$: height of the permanent magnets (4) in the radial direction (21).

**11.** Electrical machine, in particular electric motor, having the rotor (1) according to one of the preceding claims, wherein the electric motor is preferably a constituent part of a steering drive in a motor vehicle.


**Revendications**

**1.** Rotor (1) pour une machine électrique, comprenant un arbre de rotor (21) qui s'étend dans une direction axiale (2) et un corps de base (3) qui est disposé de manière concentrique autour de l'arbre de rotor (2) et fixé solidaire en rotation à celui-ci, des aimants permanents (4) étant incorporés dans le corps de base (3), et le corps de base (3) possédant des éléments jointifs communs (321) qui sont adjacents des aimants permanents (4),
**caractérisé en ce que**
les aimants permanents (4) font saillie au-dessus des éléments jointifs communs (321) au niveau de leur côté (41) faisant face à l'arbre de rotor (2).

**2.** Rotor (1) selon la revendication 1, **caractérisé en ce que** les aimants permanents (4) sont disposés dans le corps de base (3) à la manière de rayons de roue.

**3.** Rotor (1) selon l'une des revendications précédentes, **caractérisé en ce que** les éléments jointifs communs (321) sont présents des deux côtés des aimants permanents (4) et/ou les éléments jointifs communs (321) sont configurés en forme de V.

**4.** Rotor (1) pour une machine électrique, notamment selon l'une des revendications précédentes, comprenant un arbre de rotor (21) qui s'étend dans une direction axiale (2) et un corps de base (3) qui est disposé de manière concentrique autour de l'arbre de rotor (2) et fixé solidaire en rotation à celui-ci, le corps de base (3) possédant des secteurs (31) qui sont espacés de l'arbre de rotor (2) et entre lesquels est à chaque fois disposé un aimant permanent (4) à la manière d'un rayon de roue,
**caractérisé en ce que**
l'écart (310) entre les secteurs (31) et l'arbre de rotor (2) est supérieur à l'écart (40) entre les aimants permanents (4) et l'arbre de rotor (2).

**5.** Rotor (1) selon l'une des revendications précédentes, **caractérisé en ce que** le corps de base (3) possède une bague de fixation (33) qui est disposée sur le côté (41) du corps de base (3) faisant face à l'arbre de rotor (2).

**6.** Rotor (1) selon l'une des revendications précédentes, **caractérisé en ce qu'**au moins certains des secteurs (31) sont reliés à la bague de fixation (33) au moyen d'éléments jointifs longitudinaux (32).

**7.** Rotor (1) selon l'une des revendications précédentes, **caractérisé en ce que** les éléments jointifs longitudinaux (32) sont disposés entre les éléments jointifs communs (321).

**8.** Rotor (1) selon l'une des revendications précédentes, **caractérisé en ce que** des éléments jointifs de maintien (35) destinés au blocage des aimants permanents (4) dans une direction radiale (21) se trouvent sur les secteurs (31) et/ou au moins quelques-uns des secteurs (31) sont reliés entre eux au moyen d'éléments jointifs de liaison (34).

**9.** Rotor (1) selon l'une des revendications précédentes, **caractérisé en ce qu'**un espace libre (5) qui est rempli d'un matériau non conducteur, notamment d'air ou d'une matière plastique, se trouve entre les secteurs (31) et les aimants permanents (4) au niveau de leur côté (41) faisant face à l'arbre de rotor (2), et l'arbre de rotor (2) ou la bague de fixation (33).

**10.** Rotor (1) selon l'une des revendications précédentes, **caractérisé en ce que**

$$\Delta H / H_{LSt} \leq 1,1 * \Delta H / H_M$$

où

$\Delta H$ désigne la saillie (314) des aimants permanents (4)
$H_{LSt}$ désigne la longueur des éléments jointifs longitudinaux (32)
$H_M$ désigne la hauteur des aimants permanents (4) dans la direction radiale (21).

**11.** Machine électrique, notamment moteur électrique, comprenant un rotor (1) selon l'une des revendications précédentes, le moteur électrique étant de préférence un composant d'un mécanisme de direction dans un véhicule automobile.

Fig. 1

Fig. 2a

11  3,34  3,31

42

41

321  5  511

5,51

310

40

4  314

22  2

21

20

23

**Fig. 2b**

| X,△H | H$_M$ | Y |
|------|-------|------|
| 1.00 | 7.31 | 6.446 |
| 0.90 | 7.31 | 6.457 |
| 0.80 | 7.31 | 6.465 |
| 0.70 | 7.31 | 6.471 |
| 0.60 | 7.31 | 6.474 |
| 0.50 | 7.31 | 6.475 |
| 0.40 | 7.31 | 6.472 |
| 0.30 | 7.31 | 6.466 |
| 0.20 | 7.31 | 6.456 |

**Fig. 3a**

**Fig. 3b**

Fig. 4a

Fig. 4b

**IN DER BESCHREIBUNG AUFGEFÜHRTE DOKUMENTE**

**In der Beschreibung aufgeführte Patentdokumente**

- WO 2009046549 A2